(19) Europäisches Patentamt
European Patent Office
Office européen des brevets

(11) **EP 3 147 860 A1**

(12) **EUROPEAN PATENT APPLICATION**

(43) Date of publication:
**29.03.2017 Bulletin 2017/13**

(51) Int Cl.:
***G06T 5/50*** (2006.01)   ***H04N 19/597*** (2014.01)
***H04N 19/86*** (2014.01)

(21) Application number: **15306505.7**

(22) Date of filing: **28.09.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **THOREAU, Dominique**
**35576 CESSON SEVIGNE (FR)**

• **ALAIN, Martin**
**35576 CESSON SEVIGNE (FR)**
• **GUILLOTEL, Philippe**
**35576 CESSON SEVIGNE (FR)**
• **BOISSON, Guillaume**
**35576 CESSON SEVIGNE (FR)**

(74) Representative: **Browaeys, Jean-Philippe et al**
**TECHNICOLOR**
**1-5, rue Jeanne d'Arc**
**92130 Issy-les-Moulineaux (FR)**

(54) **METHOD AND APPARATUS FOR REDUCING THE CODING ARTEFACT OF A LIGHT FIELD BASED IMAGE, AND CORRESPONDING COMPUTER PROGRAM PRODUCT**

(57)   The present disclosure generally relates to a method for reducing the coding artefact of at least one pixel of a view (170) belonging to a matrix of views (17) obtained from light-field data associated with a scene,.

According to present disclosure, the method is implemented by a processor and comprises for each said at least one pixel:

- from said matrix of views (17), obtaining (51) at least one epipolar plane image (EPI) associated with said pixel,
- applying (52) an artefact filtering on pixels of said epipolar plane image (EPI)
- redistributing (53) the filtered pixels of the epipolar plane image in the matrix of views (17).

Fig. 5

EP 3 147 860 A1

**Description**

1. **Field of the invention**

The present disclosure relates to light field imaging, and to technologies for acquiring and processing light field data. More precisely, the present disclosure generally relates to a method and an apparatus for reducing the coding artefact of a light field based image, and finds applications in the domain of image or video encoding/decoding.

2. **Technical Background**

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Conventional image capture devices render a three-dimensional scene onto a two-dimensional sensor. During operation, a conventional capture device captures a two-dimensional (2-D) image representing an amount of light that reaches a photosensor (or photodetector) within the device. However, this 2-D image contains no information about the directional distribution of the light rays that reach the photosensor (which may be referred to as the light field). Depth, for example, is lost during the acquisition. Thus, a conventional capture device does not store most of the information about the light distribution from the scene.

Light field capture devices (also referred to as "light field data acquisition devices") have been designed to measure a four-dimensional (4D) light field of the scene by capturing the light from different viewpoints of that scene. Thus, by measuring the amount of light traveling along each beam of light that intersects the photosensor, these devices can capture additional optical information (information about the directional distribution of the bundle of light rays) for providing new imaging applications by post-processing. The information acquired/obtained by a light field capture device is referred to as the light field data. Light field capture devices are defined herein as any devices that are capable of capturing light field data. There are several types of light field capture devices, among which:

- plenoptic devices, which use a microlens array placed between the image sensor and the main lens, as described in document US 2013/0222633;
- a camera array, where all cameras image onto a single shared image sensor.

The light field data may also be simulated with Computer Generated Imagery (CGI), from a series of 2-D images of a scene each taken from a different viewpoint by the use of a conventional handheld camera.

Light field data processing comprises notably, but is not limited to, generating refocused images of a scene, generating perspective views of a scene, generating depth maps of a scene, generating extended depth of field (EDOF) images, generating stereoscopic images, and/or any combination of these.

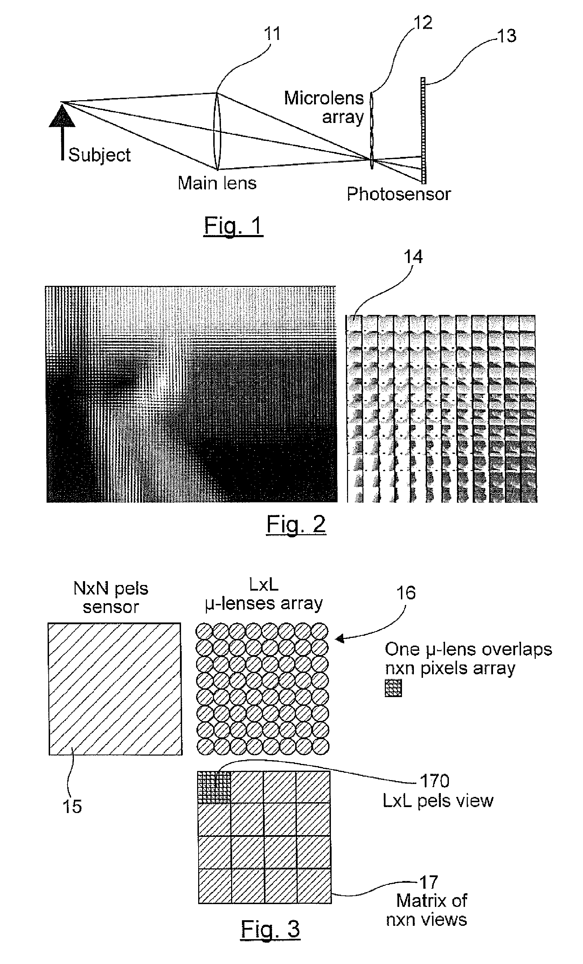

The present disclosure focuses more precisely on light field based image captured by a plenoptic device as illustrated by **Fig. 1** disclosed by R. Ng, et al. in "Light field photography with a hand-held plenoptic camera" Standford University Computer Science Technical Report CSTR 2005-02, no. 11 (April 2005*).

Such plenoptic device is composed of a main lens (11), a micro-lens array (12) and a photo-sensor (13). More precisely, the main lens focuses the subject onto (or near) the micro-lens array. The micro-lens array (12) separates the converging rays into an image on the photo-sensor (13) behind it.

A micro-image is the image (14) formed on the photo-sensor behind a considered micro-lens of the micro-lens array (12) as illustrated by **Fig. 2** disclosed by http://www.tgeorgiev.net/ where the image on the left corresponds to raw data and the image on the right corresponds to details of micro-images representing in particular a seagull's head. Micro-images resolution and number depend on micro-lenses size with respect to the sensor. More precisely, the micro-image resolution varies significantly depending on devices and applications (from 2x2 pixels up to around 100x100 pixels).

Then, from every micro-image, sub-aperture images are reconstructed. Such a reconstruction consists in gathering collocated pixels from every micro-image. The more numerous the micro-lenses, the higher the resolution of sub-aperture images. More precisely, as illustrated by **Fig. 3**, considering that one micro-lens overlaps NxN pixels of the photo-sensor (15), the NxN matrix of views (17) is obtained by considering that the $i^{th}$ view contains all the LxL $i^{th}$ pixels overlapped by each micro-lens of the micro-lens array (16) comprising LxL micro-lenses, where "x" is a multiplication operator.

More precisely, on **Fig. 3**, L=8 and N=4, the first view 300 will thus comprises the first of the sixteen pixels covered by each micro-lens of the 64 micro-lenses of the considered micro-lens array.

Sub-aperture images reconstruction required de-mozaicing. Techniques for recovering the matrix of views from raw plenoptic material are currently developed such as the one disclosed by N. Sabater et al. in "Light field demultiplexing and disparity estimation" International Conference on Complementary Problems ICCP2014.

On the opposite to the plenoptic device, camera array devices, such as the Pelican Imaging® camera, deliver directly matrices of views (i.e. without de-mozaicing).

State of Art methods for encoding such light field based images consists in using standard image or video codecs (such as JPEG, JPEG-2000, MPEG4 Part 10 AVC, HEVC). However, such standard codecs are not able to take into account the specificities of light field imaging (aka plenoptic data), which records the amount of light (the "radiance") at every point in space, in every direction.

Indeed, applying the conventional standard image or video codecs (such as JPEG, JPEG-2000, MPEG4 Part 10 AVC, HEVC) delivers conventional imaging formats.

Further all lossy coding technology generate video coding coding artefacts.

However, among the many new light field imaging functionalities provided by these richer sources of data, is the ability to manipulate the content after it has been captured; these manipulations may have different purposes, notably artistic, task-based and forensic. For instance, it would be possible for users to change, in real time, focus, field of depth and stereo baseline, as well as the viewer perspective. Such media interactions and experiences are not available with conventional imaging formats that would be obtained by using the conventional standard image or video codecs to encode/decode light field based images.

It would hence be desirable to provide a technique for reducing the video compression artefact of light field based images that would not show these drawbacks of the prior art. Notably, it would be desirable to provide such a technique, which would allow a finer rendering of objects of interest of decoded images obtained from light field based images.

## 3. **Summary**

The following presents a simplified summary of the disclosure in order to provide a basic understanding of some aspects of the disclosure. This summary is not an extensive overview of the disclosure. It is not intended to identify key or critical elements of the disclosure. The following summary merely presents some aspects of the disclosure in a simplified form as a prelude to the more detailed description provided below.

The disclosure sets out to remedy at least one of the drawbacks of the prior art with a method for reducing the coding artefact of at least one pixel of a view belonging to a matrix of views obtained from light-field data associated with a scene.

Such method is implemented by a processor and comprises for each said at least one pixel:

- from said matrix of views, obtaining at least one epipolar plane image (EPI) associated with said pixel,
- applying an artefact filtering on pixels of said epipolar plane image (EPI),
- redistributing the filtered pixels of the epipolar plane image in the matrix of views.

The present disclosure thus relies on a novel and inventive approach for reducing the video compression artefact of at least a pixel of a view belonging to a matrix of views obtained from light-field data associated with a scene. Actually, the present disclosure benefits from the specific properties of the linear structures inside an epipolar plane image.

More precisely, and as disclosed by B. Goldluecke et al. in "The Variational Structure of Disparity and Regularization of 4D Light Fields" pp 1003-1010 2013 IEEE Conference on Computer Vision and Pattern Recognition, a horizontal (respectively a vertical) epipolar plane image is a 2D image, built by stacking all images of a matrix of views along a line (respectively a column) of views of said matrix of view, on top of each other, and corresponds to a cut through the obtained stack along a same line of each stacked view (respectively along a same column of each stacked view).

It has to be noted that another orientation different from horizontal or vertical can be used for obtaining the corresponding EPI.

In other words, according to present disclosure, said at least one epipolar plane image (EPI) is a horizontal epipolar plane image (EPI), a vertical epipolar plane image (EPI) or an epipolar plane image (EPI) presenting an angular orientation with respect to a horizontal or vertical epipolar plane image, for example 45° or 135°.

Applying an artefact filtering on pixels of said epipolar plane image permits to take advantage of the inter-views correlations accurately, to improve the efficiency of the coding artefact reduction.

As a consequence, thanks to the method for reducing the coding artefact of the present disclosure based on the Epipolar Plane images, it is possible to provide a reduction of artefact which takes advantage of the specificities of plenoptic imaging providing matrix of views.

It has to be noted that B. Goldluecke in "The Variational Structure of Disparity and Regularization of 4D Light Fields" neither discloses nor suggests to use epipolar plane images for reducing the coding artefact during an encoding/decoding process, but use epipolar plane images for deriving differential constraints on a vector field on epipolar plane image space to enable consistent disparity field related to the regularization of more general vector-valued functions on the 4D ray space of the light field.

Using epipolar plane images permits to exploit the properties of the four-dimensional (4D) light field of the scene, since their building is based on the stacking of views representing the light from different viewpoints of that scene, i.e. viewpoints of a same line of the matrix of views for a horizontal epipolar plane image, of a same column of the matrix of views for a vertical epipolar plane image, or of a same set of views of said matrix of views presenting a predetermined angular orientation with respect to a line or a column of said matrix of views.

According to a first embodiment of the present disclosure, said applying an artefact filtering comprises averaging estimates. As these estimates are calculated in the epipolar planes images, the estimation can exploit their properties.

According to another embodiment, each estimate is obtained from the filtering of a patch containing the pixel. Calculating the estimates by filtering of patches permits to take advantage of the geometrical properties of the epipolar plane images representation, in a more efficient way than a standard pixel-based filtering.

Filtering of a patch may comprise applying a non local mean denoising algorithm, in order to provide a good estimation, by calculating the estimates not only by using local information, but all information contained in a large area.

The patches may be rectangular blocks of n x m pixels, and applying an artefact filtering may then comprise averaging the n x m estimates obtained by filtering the n x m patches containing the pixel. Using rectangular patches of n x m pixels implies that each pixel of the epipolar plane images is included in n x m different patches. Obtaining one estimate per patch, and averaging all these n x m estimates permits to take full advantage of the patch-based filtering.

According to an embodiment, the filtering of a patch may be a weighted average of candidate patches in the epipolar plane image (EPI). Using weights allows to balance the influence of each candidate patch according to specific parameters.

The weights may depend on a distance between said patch and said candidate patches. Such a distance could a measurement of the difference between the considered patch to filter and the candidate patch, for example based on the luminance of the pixels of the patches.

The weights may depend on a distance between the centres of the candidate patches and the closest horizontal or vertical frontier of the coding block or transform unit structure in the matrix of views. This embodiment lowers the influence of the candidate patches the most damaged by particular coding effects.

The weights may depend on the quantizer step. In this embodiment the filtering process is adapted to the level of artefact induced by the quantization step. Knowing that in the State of Art methods for video encoding such as MPEG4, HEVC, the quantizer step is used to quantize the transform (ex DCT)) coefficients of the residual error prediction of the block to encode and the next step in term of video encoding is to apply an entropy encoding to quantized coefficients.

According to an embodiment the filtering of a patch is a weighted average of the K candidate patches having the highest weights. In this embodiment, only the K candidate patches which are the most similar to the considered patch are used in the filtering process.

According to an embodiment the at least one epipolar plane image (EPI) is a horizontal epipolar plane image (EPI), a vertical epipolar plane image (EPI) or an epipolar plane image (EPI) presenting an angular orientation with respect to a horizontal or vertical epipolar plane image. Epipolar plane images (EPI) can be constructed according to different angular orientations, and indeed each of these different orientations may have geometrical properties that can be used.

According to an embodiment the sequence comprising

- from said matrix of views, obtaining at least one epipolar plane image (EPI) associated with said pixel,
- applying an artefact filtering on pixels of said epipolar plane image (EPI), and
- redistributing the filtered pixels of the epipolar plane image in the matrix of views

is applied a plurality of times, using each time an epipolar plane image (EPI) with a different angular orientation. In this embodiment, the artefact filtering is applied in at least two epipolar plane images (EPI) with different angular orientations (for example horizontal and vertical), to take benefit of different geometrical structures of the in the EPIs.

Another aspect of the present disclosure pertains to a method for encoding at least one pixel of a view belonging to a matrix of views obtained from light-field data associated with a scene, the method being implemented by a processor and comprising:

- reducing the coding artefact of at least said at least one pixel according to the method for reducing the coding artefact as described here above.

Another aspect of the present disclosure pertains to a signal representing at least one pixel of a matrix of views obtained from light-field data associated with said scene said signal being obtained by such a method for encoding as described here above.

Another aspect of the present disclosure pertains to a method for decoding a signal representing at least one pixel of a view belonging to a matrix of views obtained from light-field data associated with a scene, the method being implemented by a processor and comprising:

- reducing the coding artefact of said at least one pixel according to the method for reducing the coding artefact as described here above.

Another aspect of the present disclosure pertains to a device for encoding at least one pixel of a view belonging to a matrix of views obtained from light-field data associated with a scene, wherein said device comprises a processor configured to control:

- a module for reducing the coding artefact of said at least one pixel, said module comprising:

  ∘ an entity for obtaining, for each of said at least one pixel, from said matrix of views, at least one epipolar plane image (EPI) associated with said pixel,
  ∘ an entity for applying an artefact filtering on pixels of said epipolar plane image (EPI),
  ∘ redistributing the filtered pixels of the epipolar plane image in the matrix of views.

Such an encoding device is adapted especially for implementing the method for reducing the coding artefact and the method for encoding as described here above.

Another aspect of the present disclosure pertains to a device for decoding at least one encoded pixel of a view belonging to a matrix of views obtained from light-field data associated with a scene, wherein said device comprises a processor configured to control:

- a module for reducing the coding artefact of said at least one pixel, said module comprising:

  ∘ an entity for obtaining, for each of said at least one pixel, from said matrix of views, at least one epipolar plane image (EPI) associated with said pixel,
  ∘ an entity for applying an artefact filtering on pixels of said epipolar plane image (EPI),
  ∘ redistributing the filtered pixels of the epipolar plane image in the matrix of views.

Such a decoding device is adapted especially for implementing the method for reducing the coding artefact and the method for decoding as described here above.

The disclosure relates thus to devices comprising a processor configured to implement the above methods.

According to other of its aspects, the disclosure relates to a computer program product comprising program code instructions to execute the steps of the above methods when this program is executed on a computer, a processor readable medium having stored therein instructions for causing a processor to perform at least the steps of the above methods, and a non-transitory storage medium carrying instructions of program code for executing steps of the above methods when said program is executed on a computing device.

The specific nature of the disclosure as well as other objects, advantages, features and uses of the disclosure will become evident from the following description of embodiments taken in conjunction with the accompanying drawings.

## 4. Brief Description of Drawings

In the drawings, an embodiment of the present disclosure is illustrated. It shows:

- **Fig. 1**, already presented in relation with prior art, shows the conceptual schematic of a plenoptic camera;
- **Fig. 2**, already presented in relation with prior art, shows an example of picture shot with a plenoptic camera;
- **Fig. 3** already presented in relation with prior art, shows respectively a camera sensor (15), et micro-lens array (16) and a matrix of views (17);
- **Fig. 4** shows the building of an epipolar plane image obtained from a matrix of views;
- **Fig. 5** shows schematically a diagram of the main steps of the method for reducing the coding artefact according to the present disclosure;
- **Fig. 6** shows schematically a diagram of the sub-steps of the determining of an optimal unidirectional prediction mode in accordance with two embodiments of the disclosure;
- **Fig. 7** illustrates, in the epipolar plane image, a patch containing the pixel represented in gray, and seven candidate patches represented in white
- **Fig. 8** shows an example of architecture of a device in accordance with an embodiment of the disclosure.

Similar or same elements are referenced with the same reference numbers.

## 5. Description of Embodiments

*5.1 General Principle*

The present disclosure proposes a new technique for reducing the coding artefact implementing a new type of filtering based on the Epipolar Plane Images (EPI) representation of a matrix of views.

The approach proposed in the present disclosure is able to cope with the specific properties of the linear structures inside the Epipolar Plane Images (EPI) and as a consequence suitable for exploiting the properties of the four-dimensional (4D) light field of the scene.

The present disclosure will be described more fully hereinafter with reference to the accompanying figures, in which embodiments of the disclosure are shown. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Although some of the diagrams include arrows on communication paths to show a primary direction of communication, it is to be understood that communication may occur in the opposite direction to the depicted arrows.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the disclosure. The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

The disclosure is described for reducing the coding artefacts of at least one pixel of a view (170) belonging to a matrix of views encoding/decoding a block of pixels of a view of a matrix of views but extends to reducing the coding artefacts of at least one pixel of a view (170) belonging to a matrix of views of a sequence of matrix of views (plenoptic video).

*5.2 The coding artefact reduction method*

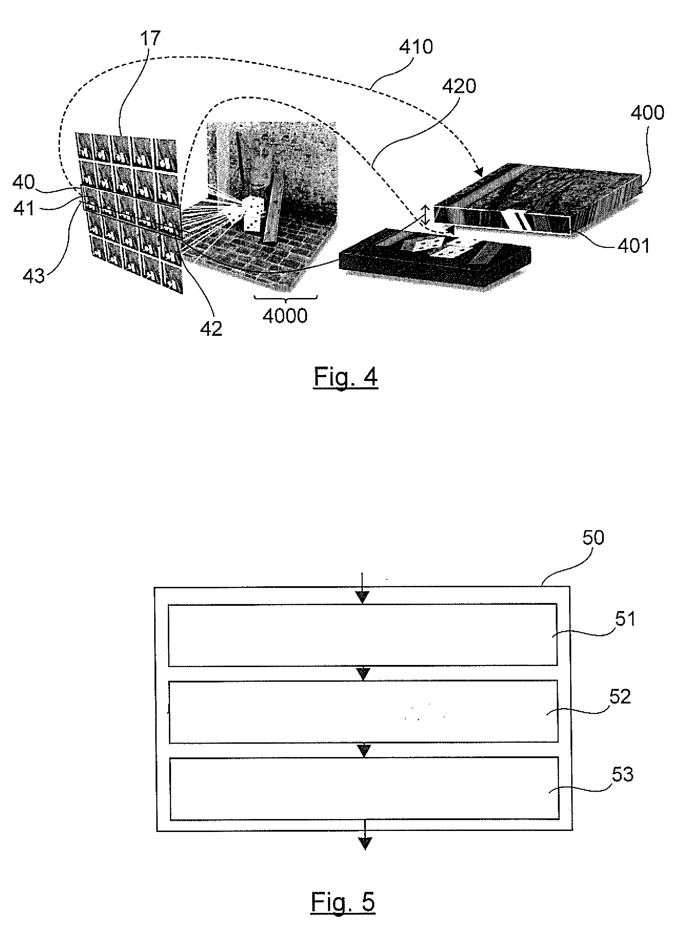

**Fig. 5** shows schematically a diagram of the main steps of the method (50) for reducing the video compression artefact according to the present disclosure, said method being performed by a module for reducing the artefact.

According to the present disclosure, the method (50) for reducing the coding artefact of at least one pixel of a view (170) belonging to a matrix of views (17) obtained from light-field data associated with a scene, as represented on **Fig. 3**, is implemented by a processor and comprises, for said at least one pixel, obtaining (51) at least one epipolar plane image (EPI) associated with said pixel by using an entity for obtaining.

Said obtaining (51) is illustrated by **Fig. 4** and disclosed by B. Goldluecke et al. in "The Variational Structure of Disparity and Regularization of 4D Light Fields" pp 1003-1010 2013 IEEE Conference on Computer Vision and Pattern Recognition.

The matrix of views (17) represents a 4D light field as a collection of images of a scene (4000), where the focal points of the cameras lie in a 2D plane.

Obtaining (51) an epipolar plane image consists in stacking all images along a line (40) of view points on top of each other, i.e. the first image (41) of the line (40) is on the top of the stack (400) as represented by the arrow (410), whereas the last image (42) of the line (40) is below the stack (400) as represented by the arrow (420). Then, a cut (401) through this stack (400) is performed along the same line (43) of each view. Such a cut is a horizontal epipolar plane image (EPI).

In other words, considering a matrix of views composed of BxD views (in **Fig. 4** B=D=5) of indexes v,u respectively in line and column, and each views of size LxC pixels, of indexes t, s respectively in line and column, the horizontal EPI, as represented on **Fig. 4** $E_h^{v,t}$ with v=0,...,B-1 of size DxC is realized by stacking the $t^{th}$ row of all the $v^{th}$ sub-images. In other words, the epipolar plane image is a 2D image, built by stacking one over the other, the view lines (fixed t coordinate corresponding to the view line (43)) from all views along a line of the (u,v) plane of the matrix of views (17) (fixed v coordinate corresponding to the line (40)).

Similarly, the vertical EPI $E_v^{u,s}$ with u=0,...,D-1 of size LxB is realized by stacking the $s^{th}$ column of all the $u^{th}$ sub-images.

It has to be noted that another orientation different from horizontal or vertical can be used for obtaining the corresponding EPI.

Thus, the proposed disclosure provides at least one epipolar plane image for each pixel of a view of a given matrix of views where artefact reduction is to be performed.

Said at least one epipolar plane image (EPI) can be a horizontal epipolar plane image (EPI), a vertical epipolar plane image (EPI) or an epipolar plane image (EPI) presenting an angular orientation with respect to a horizontal or vertical epipolar plane image.

It has to be noted that a considered pixel can be associated to at least two epipolar plane images (EPI) corresponding, to a horizontal epipolar plane image (EPI) and a vertical epipolar plane image (EPI), or to a set of different angular orientations epipolar plane images (EPI).

Once at least one epipolar plane image is obtained (51) for the considered pixel, the artefact filtering (52) is performed in said at least one epipolar plane image using an entity for artefact filtering.

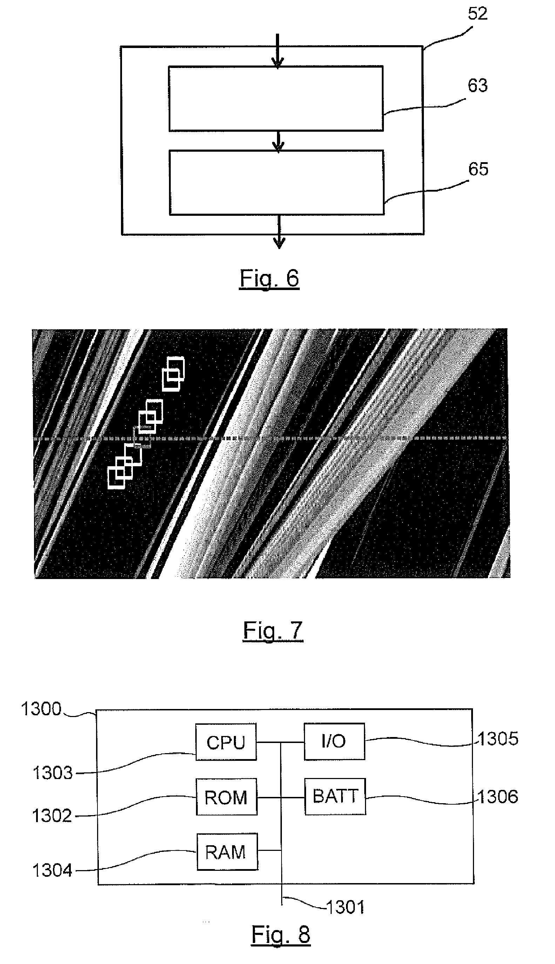

More precisely, according to the embodiment represented **Fig. 6**, for the considered pixel, estimates are calculated (63) and averaged (65).

In particular, according to the present disclosure, one estimate is calculated for each patch containing the pixel. If for example the patch is a rectangular block of n x m pixels, then the considered pixel will be contained in n x m different patches. In that case n x m estimates are calculated (63) and averaged (65). The use of patches to calculate the estimates exploits the directional structures of the epipolar plane images, in order to produce accurate estimates.

In order to calculate the estimates, at least one patch containing the considered pixel is filtered, for example by a non local mean (NLM) denoising filter. The principle of non local mean denoising is to replace the patch by a combination of the most similar patches. The scan for similar patched may be performed in a large surrounding area up to the whole epipolar plane image, in order to use the patches that really ressemble the patch one wants to denoise. **Fig. 7** illustrates, in the epipolar plane image, a patch containing the pixel represented in gray, and seven candidate patches represented in white.

The denoising filtering process may be for example a weighted average of all candidate patches in the considered neighbourhood, up to the whole epipolar plane image.

Each weight may depend, for example, on a distance between the patch one wants to denoise, and the considered candidate patch in the neighbourhood, the distance being calculated in the considered domain, for example in the luminance and chrominance domain. The distance between the considered patch and each candidate patch may be calculated in the luminance domain only. The distance evaluates the similarities between the considered patch and the candidate patch. The weight function is set in order to average similar patches, that is similar patches will get a high weight while significantly different patches will get a very limited weight close to 0.

For example, an exponential kernel can be used to calculate the weight *w* of a candidate patch *q* according to the following formula:

$$w(q) = e^{-\frac{MAX(d^2 - 2\sigma^2, 0.0)}{h^2}}$$

with

$$d^2 = \sum_{i=0}^{U} \sum_{J=-0}^{V} \left( b(i,j) - q(i,j) \right)^2$$

- V and U the vertical and horizontal dimensions of the patches,
- $i$ and $j$ the vertical and horizontal coordinates of the pixels in the patches,

In which $\sigma$ is the standard deviation of the noise and $h$ is the filtering parameter set depending on the value of $\sigma$. In this case, candidate patches $q$ with a square distance $d$ to the patch $b$ one wants to filter smaller than $2\sigma^2$ have weights set to 1, while the weights of candidate patches with larger distances decrease rapidly accordingly to the exponential kernel.

In the context of video compression, the coding artefact is mainly located near the border of the block in the matrix of views, or coding unit (CU) structure and more precisely the Transform Unit (TU) due to the quantization process of the error residual transform (for example Discrete Cosinus Transform DCT) coefficient. This is why the denoising filtering process may use the distance between the centres of the candidate patches (used in the non local mean filtering) and the closest horizontal or vertical frontier of the coding block or transform unit structure (in the matrix of views), when calculating the weight associated with each candidate patch, so as to reduce the impact of the polluted patches on the estimates.

As a non-limiting example, the weight could be multiplied by a factor calculated according to the following formula:

$$w_b^q = e^{-\frac{MAX\left(2\sigma_b{}^2 - MIN\left(\Delta b_x, \Delta b_y\right)^2, 0.0\right)}{h_b{}^2}}$$

In which $(\Delta b_x, \Delta b_y)$ are the horizontal and vertical distances (in pixel) in the image of matrix of views between the center of the candidate patch q and the frontier of the coding block/TU structure, $2\sigma_b{}^2$ is a parameter so that when the distance between the central pixel of the candidate patch q and the frontier of the coding block/TU structure is over $\sqrt{2} \times \sigma_b$, $w_b^q$ is equal to 1 and $h_b{}^2$ is relative to the a filter strength.

For example these parameters could be $\sigma_b$=4, and $h_b = \sigma_b$x2.6 and the resulting $w_b^q$ values would then be:

| $w_b^q$ | Min($\Delta$x,$\Delta$y) |
|---|---|
| 0.75 | 0 |
| 0.77 | 1 |
| 0.81 | 2 |
| 0.86 | 3 |
| 0.94 | 4 |
| 1 | 5 |
| 1 | 6 |
| 1 | 7 |
| 1 | 8 |

Because the quality of the candidate patches is inherent to the quantizer step value, the quantizer step may be considered when calculating the weight associated with each candidate patch.

For example, the weight could be multiplied by a factor calculated according to the following formula:

$$w_{QP}^q = e^{-\frac{MAX\left(QP^2 - 2\sigma_{QP}^2, 0.0\right)}{h_{QP}^2}}$$

In which QP is the quantizer step applied to coding block or coding unit in the image of matrix of views, $2\sigma_{QP}^2$ a parameter so that when QP is under a given value of $\sqrt{2} \times \sigma_{QP}$, $w_{QP}^q$ is equal to 1, and $h_{QP}^2$ is relative to a filter strength.

An example of possible values for theses parameters are: $\sigma_{QP}$=14.5, and $h_{QP} = \sigma_{QP} \times 6$, the resulting $w_{QP}^q$ values:

- are equal to 1. for $0 \leq QP \leq 21$
- and decrease slowly to 0.75 from QP=22 to 51.

Of course different parameters may be simultaneously considered to calculate the weights. For example if all the previous formulas are used, the weight of a candidate patch q would be calculated according to the following formula:

$$w(q) = e^{-\frac{MAX(d^2 - 2\sigma^2, 0.0)}{h^2} - \frac{MAX\left(2\sigma_b^2 - MIN\left(\Delta b_x, \Delta b_y\right)^2, 0.0\right)}{h_b^2} - \frac{MAX\left(QP^2 - 2\sigma_{QP}^2, 0.0\right)}{h_{QP}^2}}$$

In another embodiment, only the K best candidates patches (that is the K candidate patches with the highest weights), are taken into account when the estimates are calculated by non local mean filtering the patches.

In another embodiment, the method for reducing the coding artefact (50) is applied several times, each time using an epipolar plane image (EPI) having a different angular orientation (horizontal, vertical, or other like 45° or 135°).

The method for reducing the coding artefact technique as previously described can be used in the coding loop of a matrix of views encoder, and in the loop of the corresponding matrix of views decoder.

*5.3 Structures of the module*

On **Fig. 5 and 6**, the modules are functional units, which may or not be in relation with distinguishable physical units. For example, these modules or some of them may be brought together in a unique component or circuit, or contribute to functionalities of a software. A contrario, some modules may potentially be composed of separate physical entities. The apparatus which are compatible with the disclosure are implemented using either pure hardware, for example using dedicated hardware such ASIC or FPGA or VLSI, respectively « Application Specific Integrated Circuit », « Field-Programmable Gate Array », «Very Large Scale Integration », or from several integrated electronic components embedded in a device or from a blend of hardware and software components.

**Fig. 8** represents an exemplary architecture of a device 1300 which may be configured to implement a method (50) for reducing a coding artefact described in relation with **Fig. 1-6**, an encoding method or a decoding method comprising a method (50) for reducing a cording artefact.

Device 1300 comprises following elements that are linked together by a data and address bus 1301:

- a microprocessor 1303 (or CPU), which is, for example, a DSP (or Digital Signal Processor);
- a ROM (or Read Only Memory) 1302;
- a RAM (or Random Access Memory) 1304;
- an I/O interface 1305 for transmission and/or reception of data, from an application; and
- a battery 1306.

According to a variant, the battery 1306 is external to the device. Each of these elements of **Fig. 8** are well-known by those skilled in the art and won't be disclosed further. In each of mentioned memory, the word « register » used in the specification can correspond to area of small capacity (some bits) or to very large area (e.g. a whole program or large amount of received or decoded data). ROM 1302 comprises at least a program and parameters. Algorithm of the methods according to the disclosure is stored in the ROM 1302. When switched on, the CPU 1303 uploads the program in the RAM and executes the corresponding instructions.

RAM 1304 comprises, in a register, the program executed by the CPU 1303 and uploaded after switch on of the device 1300, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a specific embodiment of encoding or encoder, said matrix of views is obtained from a source. For example, the source belongs to a set comprising:

- a local memory (1302 or 1304), e.g. a video memory or a RAM (or Random Access Memory), a flash memory, a ROM (or Read Only Memory), a hard disk ;
- a storage interface, e.g. an interface with a mass storage, a RAM, a flash memory, a ROM, an optical disc or a magnetic support;
- a communication interface (1305), e.g. a wireline interface (for example a bus interface, a wide area network interface, a local area network interface) or a wireless interface (such as a IEEE 802.11 interface or a Bluetooth® interface); and
- a picture capturing circuit (e.g. a sensor such as, for example, a CCD (or Charge-Coupled Device) or CMOS (or Complementary Metal-Oxide-Semiconductor)).

According to different embodiments of the decoding or decoder, the decoded matrix of views is sent to a destination; specifically, the destination belongs to a set comprising:

- a local memory (1302 or 1304), e.g. a video memory or a RAM (or Random Access Memory), a flash memory, a ROM (or Read Only Memory), a hard disk ;
- a storage interface, e.g. an interface with a mass storage, a RAM, a flash memory, a ROM, an optical disc or a magnetic support;
- a communication interface (1305), e.g. a wireline interface (for example a bus interface, a wide area network interface, a local area network interface) or a wireless interface (such as a IEEE 802.11 interface or a Bluetooth® interface); and
- a display.

Implementations of the various processes and features described herein may be embodied in a variety of different processing equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and any other device for processing a picture or a video or other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for reducing the coding artefact of at least one pixel of a view (170) belonging to a matrix of views (17) obtained from light-field data associated with a scene, the method being implemented by a processor and comprising for said at least one pixel:

   - from said matrix of views (17), obtaining (51) at least one epipolar plane image (EPI) associated with said pixel,
   - applying (52) an artefact filtering on pixels of said epipolar plane image (EPI)
   - redistributing (53) the filtered pixels of the epipolar plane image in the matrix of views (17).

2. The method for reducing the coding artefact according to claim 1, wherein applying (52) an artefact filtering comprises calculating (63) estimates and averaging (65) said estimates.

3. The method for reducing the coding artefact according to claim 2, wherein at least one estimate is obtained by the filtering (63) of a patch containing the pixel.

4. The method for reducing the coding artefact according to claim 3, wherein the filtering (63) of a patch comprises applying a non local mean denoising filtering.

5. The method for reducing the coding artefact according to claim 3 or 4, wherein the patches are rectangular blocks of n x m pixels, and applying (52) an artefact filtering comprises averaging (65) the n x m estimates obtained by filtering (63) the n x m patches containing the pixel.

6. The method for reducing the coding artefact according to claim 3 or 4, wherein said filtering (63) of a patch is a weighted average of candidate patches in the epipolar plane image (EPI).

7. The method for reducing the coding artefact according to claim 6, wherein the weights depend on

   - a distance between said patch and said candidate patches, and/or
   - a distance between the centres of the candidate patches and the closest horizontal or vertical frontier of the coding block or transform unit structure in the matrix of views, and/or
   - the quantizer step.

8. The method for reducing the coding artefact according to any of claims 6 or 7, wherein the said filtering (63) of a patch is a weighted average of the K candidate patches having the highest weights.

9. The method for reducing the coding artefact according to any one of the preceding claims, wherein for each said at least one pixel the sequence comprising

   - from said matrix of views (17), obtaining (51) at least one epipolar plane image (EPI) associated with said pixel,

- applying (52) an artefact filtering on pixels of said epipolar plane image (EPI), and
- redistributing (53) the filtered pixels of the epipolar plane image in the matrix of views (17)

is applied a plurality of times, using each time an epipolar plane image (EPI) with a different angular orientation.

10. A method for encoding at least one pixel of a view belonging to a matrix of views obtained from light-field data associated with a scene, the method being implemented by a processor and comprising:

- reducing (50) the coding artefact of at least said at least one pixel according to the method for reducing the coding artefact according to any one of the preceding claims.

11. A method for decoding a signal representing at least one pixel of a view belonging to a matrix of views obtained from light-field data associated with a scene, the method being implemented by a processor and comprising:

- reducing (50) the coding artefact of said at least one pixel according to the method for reducing the coding artefact according to any one of claims 1 to 12.

12. A device for encoding at least one pixel of a view belonging to a matrix of views obtained from light-field data associated with a scene, wherein said device comprises a processor configured to control:

- a module for reducing the coding artefact of said at least one pixel, said module comprising:

  ◦ an entity for obtaining, for each of said at least one pixel, from said matrix of views, at least one epipolar plane image (EPI) associated with said pixel,
  ◦ an entity for applying (52) an artefact filtering on pixels of said epipolar plane image (EPI),
  ◦ an entity for redistributing (53) the filtered pixels of the epipolar plane image in the matrix of views (17).

13. A device for decoding at least one encoded pixel of a view belonging to a matrix of views obtained from light-field data associated with a scene, wherein said device comprises a processor configured to control:

- a module for reducing the coding artefact of said at least one pixel, said module comprising:

  ◦ an entity for obtaining, for each of said at least one pixel, from said matrix of views, at least one epipolar plane image (EPI) associated with said pixel,
  ◦ an entity for applying (52) an artefact filtering on pixels of said epipolar plane image (EPI),
  ◦ an entity for redistributing (53) the filtered pixels of the epipolar plane image in the matrix of views (17).

14. A computer program product downloadable from a communication network and/or recorded on a medium readable by a computer and/or executable by a processor, comprising program code instructions for implementing a method according to any one of claims 1 to 11.

15. A non-transitory computer-readable medium comprising a computer program product recorded thereon and capable of being run by a processor, including program code instructions for implementing a method according to any one of claims 1 to 11.

Fig. 1

Fig. 2

Fig. 3

Fig. 4

Fig. 5

Fig. 6

Fig. 7

Fig. 8

Europäisches
Patentamt

European
Patent Office

Office européen
des brevets

# EUROPEAN SEARCH REPORT

Application Number

EP 15 30 6505

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2016/021925 A1 (SAMSUNG ELECTRONICS CO LTD [KR]) 11 February 2016 (2016-02-11) * abstract * * paragraph [0114] - paragraph [0120] * * figures 5a-5c * | 1,12-15 | INV. G06T5/50 H04N19/597 H04N19/86 |
| X | Zeyu Li: "Image patch modeling in a light field", Technical Report No. UCB/EECS-2014-81, 15 May 2014 (2014-05-15), pages 1-114, XP055235685, ISBN: 978-1-321-26002-1 Retrieved from the Internet: URL:http://www.eecs.berkeley.edu/Pubs/TechRpts/2014/EECS-2014-81.pdf [retrieved on 2015-12-11] * Section 2.3 2D grid camera array * * Section 2.5 Non-local Mean image denoising in a light field * * Section 3.3 Two-stage joint image denoising * | 1-15 | |
| A | BUADES A ET AL: "A Non-Local Algorithm for Image Denoising", PROCEEDINGS / 2005 IEEE COMPUTER SOCIETY CONFERENCE ON COMPUTER VISION AND PATTERN RECOGNITION, CVPR 2005 : [20 - 25 JUNE 2005, SAN DIEGO, CA], IEEE, PISCATAWAY, NJ, USA, vol. 2, 20 June 2005 (2005-06-20), pages 60-65, XP010817500, DOI: 10.1109/CVPR.2005.38 ISBN: 978-0-7695-2372-9 * Section 3. NL-means algorithm * | 1-15 | TECHNICAL FIELDS SEARCHED (IPC) G06T H04N |

-/--

The present search report has been drawn up for all claims

| Place of search | Date of completion of the search | Examiner |
|---|---|---|
| The Hague | 29 March 2016 | Hampson, Frances |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 15 30 6505

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/131748 A1 (ONO TOSHIYUKI [JP] ET AL) 14 May 2015 (2015-05-14)<br>* abstract *<br>* paragraph [0021] - paragraph [0028] *<br>* figure 1 *<br>----- | 1 | |

TECHNICAL FIELDS
SEARCHED     (IPC)

The present search report has been drawn up for all claims

| Place of search | Date of completion of the search | Examiner |
|---|---|---|
| The Hague | 29 March 2016 | Hampson, Frances |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

**EP 3 147 860 A1**

## ANNEX TO THE EUROPEAN SEARCH REPORT
## ON EUROPEAN PATENT APPLICATION NO.

EP 15 30 6505

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2016

| Patent document cited in search report | | Publication date | Patent family member(s) | | Publication date |
|---|---|---|---|---|---|
| WO 2016021925 | A1 | 11-02-2016 | CN | 105376558 A | 02-03-2016 |
| | | | KR | 20160018022 A | 17-02-2016 |
| | | | US | 2016044305 A1 | 11-02-2016 |
| | | | WO | 2016021925 A1 | 11-02-2016 |
| US 2015131748 | A1 | 14-05-2015 | JP | 2015095764 A | 18-05-2015 |
| | | | US | 2015131748 A1 | 14-05-2015 |

For more details about this annex : see Official Journal of the European Patent Office, No. 12/82

EPO FORM P0459

18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130222633 A

### Non-patent literature cited in the description

- **R. NG et al.** Light field photography with a hand-held plenoptic camera. *Standford University Computer Science Technical Report CSTR 2005-02,* April 2005
- **N. SABATER et al.** Light field demultiplexing and disparity estimation. *International Conference on Complementary Problems,* 2014
- **B. GOLDLUECKE et al.** The Variational Structure of Disparity and Regularization of 4D Light Fields. *IEEE Conference on Computer Vision and Pattern Recognition,* 2013, 1003-1010
- **B. GOLDLUECKE.** *The Variational Structure of Disparity and Regularization of 4D Light Fields*